# EUROPÄISCHE PATENTANMELDUNG

(11) **EP 4 696 143 A1**
(43) Veröffentlichungstag der Anmeldung: **18.02.2026**
(21) Anmeldenummer: 24194110.3
(22) Anmeldetag: 12.08.2024
(51) Int. Cl.: A23G 1/04, A23G 1/00, A23G 3/34, A23G 3/22

(54) **VERFAHREN ZUM ÜBERZIEHEN UND ÜBERZIEHMASCHINE**

(71) Anmelder: Sollich KG, 32105 Bad Salzuflen (DE)
(72) Erfinder: König, Maximilian, 32105 Bad Salzuflen (DE); Bläsing, Rüdiger, 32105 Bad Salzuflen (DE); Schmidt, Maximilian, 32105 Bad Salzuflen (DE)
(74) Vertreter: REHBERG HÜPPE + PARTNER

(57) **Zusammenfassung**

Zum Überziehen von Objekten (2) mit einer fließfähigen Überzugmasse (34) werden auf einem Obertrum (10) eines Gitterbands (4) aufliegende Objekte (2) durch Fortbewegen des Obertrums (10) in einer Förderrichtung (11) gefördert. Auf die auf dem Obertrum (10) aufliegenden und durch Fortbewegen des Obertrums (10) in der Förderrichtung (11) geförderten Objekte (2) wird die Überzugmasse (34) aufgebracht. Überschüssige aufgebrachter Überzugmasse (34) wird von den auf dem Obertrum (10) aufliegenden und durch Fortbewegen des Obertrums (10) in der Förderrichtung (11) geförderten Objekten (2) abgeblasen. Von Unterseiten (26) der auf dem Obertrum (10) aufliegenden und durch Fortbewegen des Obertrums (10) in der Förderrichtung (11) geförderten Objekte (2) wird die überschüssige aufgebrachte Überzugmasse (34) mit mindestens einem ersten Gasstrahl (46) abgeblasen, der an einer ersten Ausblasposition (25) ausgeblasen wird, welche unterhalb der Unterseiten (26) der Objekte (2) und in Bezug auf die Förderrichtung (11) seitlich neben den Unterseiten (26) der Objekte (2) angeordnet ist.

## Beschreibung

### TECHNISCHES GEBIET DER ERFINDUNG

Die Erfindung bezieht sich auf ein Verfahren zum Überziehen von Objekten mit einer fließfähigen Überzugmasse mit den Schritten Aufbringen der Überzugmasse auf die Objekte und Abblasen von überschüssiger aufgebrachter Überzugmasse von den auf einem Obertrum eines Gitterbands aufliegenden und durch Bewegen des Obertrums in einer Förderrichtung geförderten Objekten. Weiterhin bezieht sich die Erfindung auf eine Überziehmaschine zum Überziehen von Objekten mit einer fließfähigen Überzugmasse. Insbesondere bezieht sich die Erfindung auf eine Überziehmaschine mit den Merkmalen des Oberbegriffs des unabhängigen Patentanspruchs 6.

### STAND DER TECHNIK

Eine Überziehmaschine mit den Merkmalen des Oberbegriffs des unabhängigen Patentanspruchs 6 und ein entsprechendes Verfahren zum Überziehen von Artikeln mit Schokolade mit den Merkmalen des Oberbegriffs des unabhängigen Patentanspruchs 1 ist aus der DE 42 43 814 C1 bekannt. In der Überziehmaschine ist ein Gitterband als Endlosband angeordnet, welches umlaufend angetrieben wird. Eine Obertrum des Gitterbands reicht von einer eingangsseitigen Umlenkung, die als Leiste oder Welle ausgebildet ist, bis zu einer ausgangsseitigen Umlenkung, die ebenfalls als Leiste oder Welle ausgebildet ist. Im Betrieb der Überziehmaschine befindet sich das Obertrum des Gitterbands etwa in der durch die Umlenkungen festgelegten Ebene. Unterhalb des Obertrums sind verschiedene Aggregate angeordnet, die eine Bodenüberziehstation, eine Rüttelvorrichtung und eine Bodenabstreichwelle umfassen. Diese Aggregate liegen unmittelbar unterhalb des Obertrums und kommen im Betrieb der Überziehmaschine mit der flüssigen Überzugmasse in Berührung. So setzt sich Überzugmasse an diesen Aggregaten ab, sodass sie, insbesondere bei einem Wechsel der Überzugmasse, gereinigt werden müssen. Die Bodenüberziehstation weist eine Tunkwalze, ein Bodenwallblech sowie verschiedene Bleche auf, die ebenfalls mit der Schokolade in Kontakt kommen. Im oberen Bereich der Überziehmaschine ist eine Überziehstation vorgesehen, deren wesentlicher Bestanteil ein Schleierkasten ist, über den die flüssige Schokolade im freien Fall auf die Artikel auf dem Obertrum des Gitterbands gelangt. In Durchlaufrichtung der Artikel auf dem Gitterband ist der Überziehstation ein Gebläse nachgeschaltet, das Luft über eine düsenartige Lippe auf die kurz zuvor mit flüssiger Schokolade überzogenen Artikel ausbläst, sodass überschüssige Schokolade abgeblasen wird, durch das Obertrum des Gitterbands hindurchtritt und in eine darunter angeordnete Wanne gelangt.

Unterschiedliche Überzugmassen weisen unterschiedliche Viskositäten auf. Während die aus der DE 42 42 814 C1 bekannte Überziehmaschine gut geeignet ist, Artikel so mit Schokolade zu überziehen, dass sich auf allen Oberflächen der Artikel eine Schicht aus Schokolade gewünschter gleichmäßiger Dicke ausbildet, ist es schwierig, mit dieser Überziehmaschine dünnere geschlossene Überzüge aus höher viskosen Überzugmassen auszubilden. Solche allseitig geschlossenen Überzüge sind nicht nur ein optischer Vorteil, sondern schützen die darin eingeschlossenen Artikel vor Luftsauerstoff, Luftfeuchtigkeit und anderen Einwirkungen von außen.

### AUFGABE DER ERFINDUNG

Der Erfindung liegt die Aufgabe zugrunde, ein Verfahren und eine Überziehmaschine zum Überziehen von Objekten mit einer fließfähigen Überzugmasse aufzuzeigen, die geeignet sind, auch aus höher viskosen Überzugmassen allseitig geschlossene dünne Überzüge auf den Objekten abzubilden.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Bei dem erfindungsgemäßen Verfahren zum Überziehen von Objekten mit einer fließfähigen Überzugmasse mit den Schritten Aufbringen der Überzugmasse auf die Objekte und Abblasen von überschüssiger aufgebrachter Überzugmasse von den auf einen Obertrum eines Gitterbands aufliegenden und durch Fortbewegung des Obertrums in einer Förderrichtung geförderten Objekten wird die überschüssige aufgebrachte Überzugmasse von Unterseiten der auf dem Obertrum aufliegenden und durch Fortbewegen des Obertrums in der Förderrichtung geförderten Objekte mit mindestens einem ersten Gasstrahl abgeblasen, der an einer ersten Ausblaspositionen ausgeblasen wird, welche unterhalb der Unterseiten der Objekte und in Bezug auf die Förderrichtung seitlich neben den Unterseiten der Objekte angeordnet ist.

Das Verfahren zum Überziehen der Objekte mit der fließfähigen Überzugmasse kann also primär in Bezug auf das Abblasen der überschüssigen aufgebrachten Überzugmasse erfindungsgemäß ausgestaltet sein. Wie die Überzugmasse auf die Objekte aufgebracht wird, ist für das erfindungsgemäße Verfahren manchmal weniger entscheidend. Wie bei der eingangs geschilderten Überziehmaschine kann die Überzugmasse aus einem Schleierkasten von oben auf die Objekte auf den Obertrum herabfließen, und weitere Überzugmasse kann in einer Bodenüberziehstation von unten auf die Objekte aufgebracht werden. Ebenso kann die Überzugmasse in einer Mischtrommel auf die Objekte aufgebracht werden, oder die Objekte können vorübergehend in die Überzugmasse eingetaucht werden.

Wesentliches Merkmal der erfindungsgemäßen Ausgestaltung des Abblasens der überschüssigen aufgebrachten Überzugmasse ist das Abblasen der überschüssigen aufgebrachten Überzugmasse von den Unterseiten der Objekte. Dieses Abblasen erfolgt mit dem ersten Gasstrahl, und zwar von einer ersten Ausblasposition aus, welche zwar unterhalb der Unterseiten der Objekte, aber in Bezug auf die Förderrichtung seitlich neben den Unterseiten der Objekte angeordnet ist. Die Ausblasposition liegt also in keinem Bereich direkt unter den Unterseiten der Objekte, in dem sie von herabfließender oder herabtropfender Überzugmasse betroffen wäre.

Der mindestens eine erste Gasstrahl kann orthogonal zu der Förderrichtung ausgerichtet sein, oder unter einem leicht spitzen oder leicht stumpfen Winkel zu der Förderrichtung. Regelmäßig liegt der Winkel zu der Förderrichtung aber nicht außerhalb eines Bereiches von 60° bis 120° und meistens nicht außerhalb eines Bereichs von 75° und 105°. In Bezug zur Horizontalen ist der mindestens eine erste Gasstrahl vorzugsweise horizontal oder unter einem kleinen Winkel nach oben ausgerichtet. Dieser kleine Winkel beträgt in aller Regel maximal 45°. Meistens liegt er in einem Bereich von 0° bis 30° und bevorzugt in einem Bereich von 0° bis 15°.

Es versteht sich, dass beim Abblasen der überschüssigen aufgebrachten Überzugmasse von den Objekten die Überzugmasse über die Oberflächen der Objekte geblasen wird, was für die Ausbildung eines geschlossenen Überzugs günstig ist. So sorgt der mindestens eine erste Gasstrahl auch dafür, dass die Unterseiten der Objekte vollständig mit der Überzugmasse überzogen werden. Dies gilt, obwohl die Objekte mit ihren Unterseiten auf dem Obertrum des Gitterbands aufliegen und insoweit linienförmig durch Glieder des Gitterbands verdeckt sind. Die Überzugmasse wird mit dem ersten Gasstrahl tendenziell auch bis in die überdeckten Bereiche der Unterseite der Objekte hinein geblasen.

Bei dem erfindungsgemäßen Verfahren können die Objekte beim Abblasen der überschüssigen aufgebrachten Überzugmasse von den Unterseiten der Objekte mit mindestens einem weiteren Gasstrahl auf dem Obertrum niedergehalten werden. Dadurch wird verhindert, dass die Objekte durch Einwirkung des mindestens einen ersten Gasstrahls ungewollt von dem Obertrum abgehoben werden. Konkret können die Objekte - in der Förderrichtung betrachtet - im Bereich jedes ersten Gasstrahls mit mindestens einem weiteren Gasstrahl beaufschlagt werden, der nach unten auf ihre Oberseiten gerichtet ist, um die Objekte auf dem Obertrum niederzuhalten.

Bei dem erfindungsgemäßen Verfahren wird die überschüssige aufgebrachte Überzugmasse vor dem Abblasen von den Unterseiten vorzugsweise von beiden Seitenfläche der auf dem Gitterband aufliegenden und durch Fortbewegen des Obertrums in der Förderrichtung geförderten Objekte mit mindestens zwei zweiten Gasstrahlen abgeblasen. Diese zweiten Gasstrahlen werden an zweiten Ausblaspositionen ausgeblasen, welche in Bezug auf die Förderrichtung den beiden Seitenflächen der Objekte seitlich gegenüberliegen. Die zweiten Gasstrahlen können zu der Förderrichtung unter einem leicht spitzen oder auch unter einem leicht stumpfen Winkel in dem typischen Bereich von 60° bis 150° und in dem bevorzugten Bereich von 75° bis 105° ausgerichtet sein und horizontal ausgerichtet oder unter einem Winkel zur Horizontalen nach unten geneigt sein. Dieser Winkel kann bis zum 75° betragen. Häufig ist er nicht größer als 60°, bevorzugt ist er nicht größer als 45°, und er kann in einem Bereich von 0 bis 30° liegen.

Noch vor dem Abblasen von den beiden Seitenflächen kann die überschüssige aufgebrachte Überzugmasse von Oberseiten der auf dem Obertrum aufliegenden und durch Fortbewegung des Obertrums in der Förderrichtung geförderten Objekten mit mindestens einem dritten Gasstrahl abgeblasen werden. Dieser mindestens eine dritte Gasstrahl wird an einer dritten Ausblasposition ausgeblasen, welche oberhalb der Oberseiten der Objekte und ohne seitlichen Versatz dazu angeordnet ist. Dieser dritte Gasstrahl kann ebenso wie jeder zweite Gasstrahl durch eine lippenförmige Düse oder eine Reihe von lochförmigen Düsen ausgeblasen werden, die sich quer zu der Förderrichtung erstreckt, wobei die Reihe oder Düse für den dritten Gasstrahl oberhalb der Oberseiten der Objekte angeordnet ist. Der mindestens eine dritte Gasstrahl ist dabei in der Regel vertikal nach unten gerichtet, kann aber gegenüber der Vertikalen um einen kleinen Winkel in Förderrichtung oder entgegen der Förderrichtung geneigt sein. Dieser kleine Winkel beträgt regelmäßig nicht mehr als 45°. In der Regel ist er nicht größer als 30°. Vorzugsweise liegt er im Bereich von 0 bis 15°.

In einer Ausführungsform des erfindungsgemäßen Verfahrens wird die überschüssige ausgebrachte Überzugmasse von den Unterseiten der auf dem Obertrum aufliegenden und durch Fortbewegen des Obertrums in der Förderrichtung geförderten Objekte mit mindestens zwei ersten Gasstrahlen abgeblasen, die an zweiten Ausblaspositionen ausgeblasen werden, welche unterhalb der Unterseiten der Objekte und in Bezug auf die Förderrichtung auf beiden Seiten neben den Unterseiten der Objekte angeordnet sind. Die Unterseiten werden also von beiden Seiten mit je mindestens einem ersten Gasstrahl abgeblasen.

In einer andere Ausführungsform des erfindungsgemäßen Verfahrens wird die überschüssige aufgebrachte Überzugmasse von den Unterseiten der Objekte mit mindestens einer Gruppe von ersten Gasstrahlen abgeblasen, die an ersten Ausblaspositionen ausgeblasen werden, welche unterhalb der Unterseiten der Objekte und in Bezug auf die Förderrichtung seitlich neben den Unterseiten der Objekte hintereinander angeordnet sind. Jede Unterseite jedes Objekts wird also von der einen Seiten aus nicht nur mit einem Gasstrahl, sondern mit einer Gruppe von ersten Gasstrahlen abgeblasen, die an in Bezug auf die Förderrichtung hintereinander liegenden Ausblaspositionen ausgeblasen werden. Dabei können die Relativanordnungen der Ausblaspositionen zu den Unterseiten der Objekte und/oder die Orientierungen der einzelnen ersten Gasstrahlen zu der Förderrichtung und/oder zu der Horizontalen gleich oder unterschiedlich sein. Vorzugsweise wird die überschüssige aufgebrachte Überzugmasse von den Unterseiten der Objekte mit zwei Gruppen von ersten Gasstrahlen abgeblasen, die an ersten Ausblaspositionen ausgeblasen werden, welche unterhalb der Unterseiten der Objekte und in Bezug auf die Förderrichtung auf beiden Seiten neben den Unterseiten der Objekte hintereinander angeordnet sind. Die Vielzahl der ersten Gasstrahlen, die auf die Unterseite jedes Objektes ausgeblasen wird, kann für die Erzielung des angestrebten Ergebnisses, eines dünnen, aber geschlossenen Überzugs bei besonders viskosen Überzugmassen entscheidend sein. Konkret können auf beiden Seiten neben den Unterseiten der Objekte 5 bis 50 erste Ausblaspositionen hintereinander angeordnet sein. Hingegen ist es in der Regel nicht erforderlich, auch mehrere zweite und/oder dritte Gasstrahlen in der Förderrichtung hintereinander auf die Seitenflächen oder die Oberseiten der Objekte auszublasen.

Es versteht sich, dass die bei dem erfindungsgemäßen Verfahren ausgeblasenen Gasstrahl in der Regel Luftstrahlen sein werden. Grundsätzlich können sie aber auch eine von der Luft in der Umgebung abweichende Zusammensetzung aufweisen. Ganz grundsätzlich kann die Luft vor dem Ausbilden der Gasstahlen gereinigt und bezüglich eines oder mehrerer gasförmiger Bestandteile angereichert oder abgereichert werden.

Weiterhin versteht es sich, dass die Zahlenangaben erster, zweiter und dritter zu den Gasstrahlen, erste, zweite und dritte zu den Ausblaspositionen usw. nur zur Unterscheidbarkeit der verschiedenen Gasstrahlen, Ausblaspositionen usw. dienen, aber unmittelbar keine darüber hinausgehende Aussage treffen.

Es ist möglich, dass Teile einer Abblaseinrichtung zum Ausblasen der ersten Gasstrahlen unterhalb des Obertrums des Gitterbands angeordnet sind, auch wenn sie dort potentiell einer Verunreinigung durch von dem Obertrum abtropfende Überzugmasse besonders stark ausgesetzt ist.

Weiterhin ist es möglich, dass eine Abblaseinrichtung zum Ausblasen der ersten Gasstrahlen mit ihrem unteren Ende von oben zwischen einzelne, horizontal voneinander beabstandete Spuren des Obertrums des Gitterbands bis unter das Obertrum eintaucht. Dann sind die ersten Ausblaspositionen zwar unterhalb des Obertrums angeordnet, aber seitlich versetzt zu seinen einzelnen horizontal voneinander beabstandeten Spuren angeordnet oder zumindest abgestützt.

Eine erfindungsgemäße Überziehmaschine zum Überziehen von Objekten mit einer fließfähigen Überzugmasse weist neben einer Masseaufbringeinrichtung, die dazu ausgebildet ist, die Überzugmasse auf die Objekte aufzubringen, und einer ein umlaufendes Gitterband umfassenden Förderreinrichtung, die dazu ausgebildet ist, die auf einem Obertrum des Gitterbands aufliegenden Objekte durch Fortbewegen des Obertrums in einer Förderrichtung zu fördern, eine oberhalb des Obertrums angeordnete Abblaseinrichtung auf, die dazu ausgebildet ist, überschüssige aufgebrachte Überzugmasse von den auf dem Obertrum aufliegenden und durch Fortbewegen des Obertrums in der Förderrichtung geförderten Objekten abzublasen. Dabei weist das Obertrum des Gitterbands der erfindungsgemäßen Überziehmaschine in Querrichtung zu der Förderrichtung betrachtet mindestens einen Objektaufnahmebereich und auf mindestens einer Seite jedes Objektaufnahmebereichs einen in der Förderrichtung durchlaufenden und gegenüber dem jeweiligen Objektaufnahmebereich abgesenkten Tiefbereich auf. Ein unteres Ende der Abblaseinrichtung ist über diesem Tiefbereich des Obertrums bis auf ein Höhenniveau unterhalb von tiefsten Abstützpunkten einer Oberseite des Objektaufnahmebereichs absenkbar oder abgesenkt.

Damit wird es der Abblaseinrichtung ermöglicht, die überschüssige aufgebrachte Überzugmasse von den Unterseiten der auf dem Obertrum aufliegenden und durch Fortbewegen des Obertrums in der Förderrichtung geförderten Objekte abzublasen, und zwar von unterhalb der Unterseiten der Objekte her, obwohl die Abblaseinrichtung oberhalb des Obertrums angeordnet ist. Dort ist die Abblaseinrichtung weniger stark einer Gefahr von Verunreinigung durch die überschüssige aufgebrachte Überzugmasse ausgesetzt und ganz allgemein besser zugänglich.

Die Masseaufbringeinrichtung kann dazu ausgebildet sein, die Überzugmasse auf die auf dem Obertrum aufliegenden und durch Fortbewegen des Obertrums in der Förderrichtung geförderten Objekte aufzubringen. Die Masseaufbringeinrichtung kann dem Gitterband der Fördereinrichtung aber auch vorgeschaltet sein.

Vorzugsweise weist das untere Ende der Abblaseinrichtung eine Ausblasöffnung auf, die über dem Tiefbereich zumindest teilweise bis auf ein Höhenniveau unterhalb der tiefsten Abstützpunkte des mindestens einen Objektaufnahmebereichs absenkbar oder abgesenkt ist. Die Ausblasöffnung kann horizontal oder unter einem kleinen Winkel zur Horizontalen von nicht mehr als 30° und vorzugsweise von nicht mehr als 15° zu dem mindestens einen Objektaufnahmebereich hin ausgerichtet sein.

In einer bevorzugten Ausführungsform der erfindungsgemäßen Überziehmaschine ist - in der Förderrichtung betrachtet - im Bereich des untere Ende der Abblaseinrichtung eine Niederhalteeinrichtung oberhalb des Obertrums angeordnet, die die Objekte mit mindestens einem weiteren Gasstrahl beaufschlagt. Der mindestens eine weitere Gasstrahl ist nach unten auf die Oberseiten der Objekte gerichtet, um die Objekte kontaktlos auf dem Obertrum niederzuhalten.

Konkret kann eine Oberseite des Tiefbereichs gegenüber den tiefsten Abstützpunkten des mindestens einen Objektaufnahmebereichs um mindestens 3 mm, vorzugsweise um mindestens 6 mm und am meisten bevorzugter um mindestens 10 mm abgesenkt sein. Diese Absenkungen sind für ein Abblasen der Unterseiten der Objekte, abhängig von der Breite der Objekte, in der Regel ausreichend. Zugleich behindern sie das Umlaufenlassen eines endlosen Gitterbands durch die Ausbildung des Tiefbereichs nur in einem noch tolerablen Maß. Die Handhabbarkeit des endlosen Gitterbands beim Umlaufen lassen setzt der Absenkung des Tiefbereichs gegenüber dem tiefsten Abstützpunkten der Oberseite des mindestens einen Objektaufnahmebereichs eine Grenze, die je nach den Abmessungen des Gitterbands bei ein paar Zentimetern liegt. Für die Durchführung des erfindungsgemäßen Verfahrens wird jedoch in aller Regel keine Absenkung des Tiefbereichs um mehr als 3 cm benötigt. Vielfach sind auch maximal 2 cm ausreichend.

In dem mindestens einen Objektaufnahmebereich des Obertrums können in der Förderrichtung wechselweise aufeinander folgende Objektauflager und Objektmitnehmer ausgebildet sein. Die Objektmitnehmer sind gegenüber den Objektauflagern erhöht und stellen so sicher, dass die Objekte von dem umlaufenden Gitterband derart mitgenommen werden, dass sie dieselbe Geschwindigkeit wie das Obertrum in der Förderrichtung aufweisen. Konkret können die Objektmitnehmer gegenüber den Objektauflagern um mindestens 2 mm, vorzugsweise um mindestens 4 mm und am meisten bevorzugt um mindestens 6 mm erhöht sein. Typischerweise sind die Objektmitnehmer um nicht mehr als 3 cm und vielfach um nicht mehr als 2 cm gegenüber den Objektauflagern erhöht.

Alternativ oder zusätzlich kann der mindestens eine Objektaufnahmebereich in Querrichtung zu der Förderrichtung betrachtet zumindest im Bereich von Objektauflagern eine Rinnenform aufweisen. Dabei können seitliche Ränder gegenüber den tiefsten Abstützpunkten des mindestens einen Objektaufnahmebereichs ebenfalls um mindestens 2 mm, vorzugsweise mindestens 4 mm und am meisten bevorzugt um mindestens 6 mm erhöht sein. Genauso gilt hier die typische Obergrenze von 3 cm und häufig von 2 cm für die Erhöhung.

In einer bevorzugten Ausführungsform der erfindungsgemäßen Überziehmaschine werden durch die Objektmitnehmer und die Rinnenform des mindestens einen Objektaufnahmebereichs in Förderrichtung aufeinander folgende Objektaufnahmenester gebildet, deren Ränder in allen horizontalen Richtungen gegenüber dem tiefsten Abstützpunkten des mindestens einen Objektaufnahmebereichs erhöht sind.

Die erfindungsgemäße Überziehmaschine kann eine unterhalb des Obertrums des Gitterbands angeordnete Abnehmeinrichtung aufweisen, die dazu ausgebildet ist, überschüssige aufgebrachte Überzugmasse von einer Unterseite des Obertrums und/oder von Unterseiten der auf dem Obertrum aufliegenden Objekte abzunehmen. Dabei kann die Abnehmeinrichtung nicht nur in dem mindestens einen Objektaufnahmebereich, sondern auch in jedem benachbarten Tiefbereich an dem Gitterband angreifen, um ein Aufbauen von abgeblasener überschüssiger Überzugmasse auch in den Tiefbereichen zu verhindern.

Die Abnehmeinrichtung kann insbesondere eine Leckwelle aufweisen, die um eine quer zu der Förderrichtung verlaufende Drehachse drehangetrieben ist, vorzugsweise derart, dass sich ihre der Unterseite des Obertrums zugewandte Oberseite entgegen der Förderrichtung bewegt. Die für den Angriff der Abnehmeinrichtung an den Gitterband sowohl in dem mindestens einen Objektaufnahmebereich als auch in jedem benachbarten Tiefbereich erforderliche Form der Leckwelle der Abnehmeinrichtung weist starke Abweichungen von den Leckwellen bekannter Überziehmaschinen auf.

Die erfindungsgemäße Überziehmaschine kann weiterhin eine an dem Obertrum des Gitterbands angreifende Rütteleinrichtung aufweisen, die dazu ausgebildet ist, überschüssige aufgebrachte Überzugmasse den auf dem Obertrum aufliegenden Objekten und dem Obertrum selbst abzurütteln. Derartige Rütteleinrichtung sind zum Beispiel aus dem Stand der Technik der Schokoladenüberziehmaschinen bekannt.

Die Aufbringeinrichtung der erfindungsgemäßen Überziehmaschine kann einen oberhalb des Obertrums angeordneten Schleierkasten und einen unterhalb des Obertrums angeordneten Bodenwall aufweisen, wobei der Bodenwall eine der Unterseite des Obertrums des Gitterbands zumindest in dem Objektaufnahmebereich entsprechende Walloberseite und eine nach unten gerichtete Masseaustrittsöffnung in der Walloberseite aufweist. Die Form der Walloberseite des Bodenwalls weicht bei der erfindungsgemäßen Überziehmaschine ebenfalls deutlich von den Bodenwällen bekannter Überziehmaschinen ab.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Abnehmeinrichtung die Rede ist, ist dies so zu verstehen, dass genau eine Abnehmeinrichtung, zwei Abnehmeinrichtungen oder mehr Abnehmeinrichtungen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Ansicht wesentlicher Bestandteile einer erfindungsgemäßen Überziehmaschine und damit auch wesentlicher Schritte des erfindungsgemäßen Verfahrens.
- **Fig. 2**: ist eine perspektivische Ansicht eines Abschnitts eines Obertrums eines Gitterbands der erfindungsgemäßen Überziehmaschine gemäß Fig. 1 mit darauf angeordneten quaderförmigen zu überziehenden Objekten und verschiedener Teile einer Abblaseinrichtung zum Abblasen von überschüssiger aufgebrachter Überzugmasse von den Objekten.
- **Fig. 3**: zeigt die Anordnung gemäß Fig. 2 in einer Ansicht von vorne entgegen einer Förderrichtung, in der die auf dem Obertrum aufliegenden Objekte gefördert werden, wobei zusätzlich eine Niederhalteeinrichtung für die Objekte dargestellt ist.
- **Fig. 4**: ist eine Seitenansicht der Anordnung gemäß Fig. 2.
- **Fig. 5 und 6**: sind den Figuren 2 und 3 entsprechende Ansichten einer Anordnung mit an zylinderförmige zu überziehende Produkte angepasster Ausgestaltung des Gitterbands, aber ohne Darstellung der zusätzlichen Niederhalteeinrichtung gemäß Fig. 3.
- **Fig. 7 und 8**: sind den Figuren 2 und 3 entsprechende Ansichten einer Anordnung mit an kugelförmige zu überziehende Produkte angepasster Ausgestaltung des Gitterbands, wieder ohne Darstellung der zusätzlichen Niederhalteeinrichtung gemäß Fig. 3; und.
- **Fig. 9 bis 11**: sind den Figuren 2 bis 4 entsprechende Ansichten einer Anordnung mit an Puckförmige zu überziehende Produkte angepasster Ausgestaltung des Gitterbands, wobei zusätzlich eine Masseaufbringeinrichtung zum Aufbringen der Überzugmasse auf die Objekte dargestellt ist.

### FIGURENBESCHREIBUNG

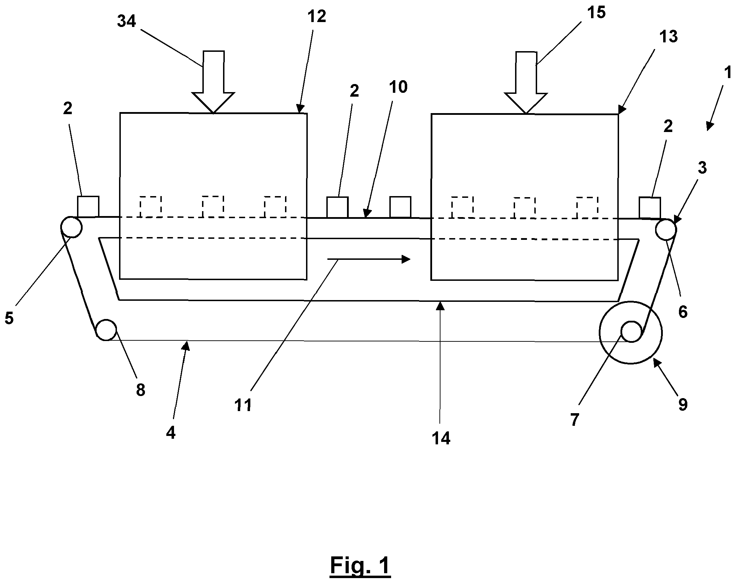

Die in **Fig. 1** schematisch in Form wesentlicher Bestandteile dargestellte Überziehmaschine 1 dient zum Überziehen von Objekten 2 mit einer fließfähigen Überzugmasse 34. Eine Fördereinrichtung 3 der Überziehmaschine 1 weist ein umlaufendes Gitterband 4 auf, das um Umlenkrollen 5 bis 8 geführt ist. Dabei ist die Umlenkrolle 7 mit einem Elektromotor 9 angetrieben, um das Gitterband 4 um die Umlenkrollen 5 bis 8 umlaufen zu lassen. Dadurch bewegt sich das Obertrum 10 des Gitterbands 4 in einer Förderrichtung 11, die in Fig. 1 horizontal von links nach rechts verläuft. Die mit der Überzugmasse 34 zu überziehenden Objekte 2 liegen auf dem Obertrum 10 auf und werden auf dem Obertrum 10 aufliegend in der Förderrichtung 11 nacheinander durch eine Masseaufbringeinrichtung 12 und eine Abblaseinrichtung 13 gefördert. Die Masseaufbringeinrichtung 12 und die Abblaseinrichtung 13 sind oberhalb und innerhalb einer Wanne 14 angeordnet, die überschüssige Überzugmasse 34 aufnimmt, welche bereits in der Masseaufbringeinrichtung 12 und dahinter durch das Obertrum 10 des Gitterbands 4 abläuft und welche in der Abblaseinrichtung 13 mit Hilfe von zugeführter Luft 15 von den Objekten 2 abgeblasen wird, weil es sich um überschüssige aufgebrachte Überzugmasse 34 handelt. Die Masseaufbringeinrichtung 12 kann ganz unterschiedlich ausgestaltet sein und die Überzugmasse 34 bereits auf die Objekte 2 aufbringen, bevor diese auf das Obertrum 10 des Gitterbands 4 der Fördereinrichtung 3 aufgelagert werden, um sie durch die Abblaseinrichtung 12 zu führen.

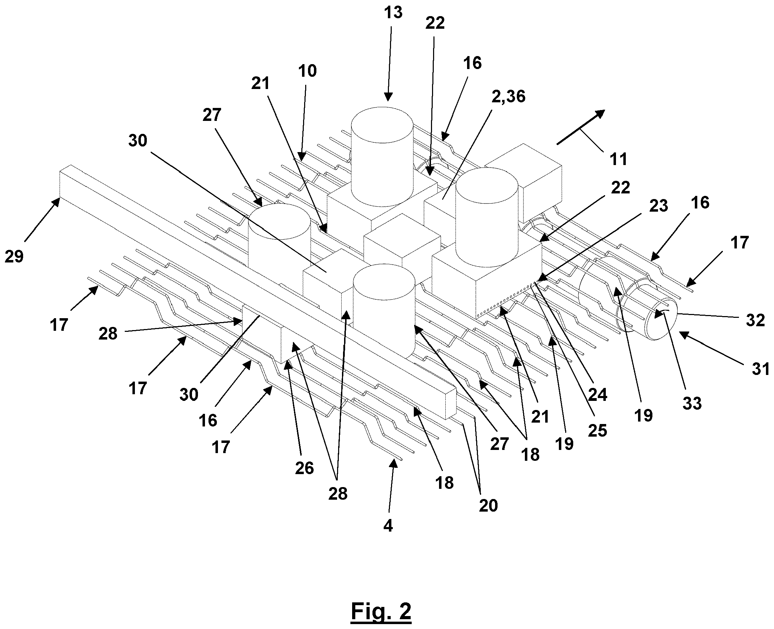

**Fig. 2** zeigt einen Abschnitt des Obertrums 10 des Gitterbands 4. Das durch die Formen seiner einzelnen Gitterstäbe 20 gestaltete Gitterband 4 ist quer zu der Förderrichtung 11 in wechselweise aufeinander folgende Objektaufnahmebereiche 16 und Tiefbereiche 17 unterteilt. Die Objektaufnahmebereiche 16 dienen zum Auflagern der Objekte 2. In Fig. 2 sind jedoch nur Objekte 2 dargestellt, die auf den mittleren der drei Objektaufnahmebereiche 16 aufgelagert sind.

Die Objektaufnahmebereiche 16 weisen in der Förderrichtung 11 wechselweise aufeinanderfolgende Objektauflager 18 und Objektmitnehmer 19 auf. Im Bereich Objektauflager definieren die einzelnen Gitterstäbe 20 des Gitterbands 4 ebene horizontal ausgerichtete Objektauflager 18. Gegenüber diesen Objektauflagern sind die Objektmitnehmer 19 um ein paar Millimeter, beispielsweise 8 mm erhöht. Die Objektmitnehmer 19 stellen sicher, dass die Objekte 2 in den Objektaufnahmebereichen 16 in definierten Abständen in der Förderrichtung aufeinander folgen und dem Obertrum 10 in der Förderrichtung 11 mit gleicher Geschwindigkeit folgen.

Auf beiden Seiten jedes Objektaufnahmebereichs ist je einer der in der Förderrichtung 11 durchlaufenden und gegenüber dem jeweiligen Objektaufnahmebereich 16 abgesenkten Tiefbereiche 17 angeordnet. Über den Tiefbereichen sind untere Enden 21 von ersten Teilen 22 der Abblaseinrichtung 13 bis unter die Objektauflager 18 abgesenkt. Dabei weisen die ersten Teile 22 der Abblaseinrichtung 13 Reihen 23 von Ausblasöffnungen 24 auf, die über dem jeweiligen Tiefbereich 17 bis auf ein Höhenniveau unter der Oberseite der Objektauflager 18 abgesenkt sind. Die Ausblasöffnungen 24 definieren erste Ausblaspositionen 25, an denen Gasstrahlen horizontal und quer zu der Förderrichtung 11 ausgeblasen werden, um überschüssige aufgebrachte Überzugmasse von Unterseiten 26 der auf dem Obertrum 10 aufliegenden Objekte 2 abzublasen.

Bevor die Objekte 2 mit der aufgebrachten Überzugmasse 34 in den Einwirkungsbereich der ersten Teile 22 der Abblaseinrichtung 13 gelangen, gelangen sie in den Einwirkungsbereich zweiter Teile 27 der Abblaseinrichtung, mit denen die überschüssige aufgebrachte Überzugmasse vor dem Ablasen von den Unterseiten 26 von den beiden Seitenflächen 28 der Objekte 2 abgeblasen wird. Dazu werden an zweiten Ausblaspositionen, die in Bezug auf die Fördereinrichtung einander und damit den Seitenflächen 28 der Objekte 2 seitlich gegenüberliegen, mindestens zwei zweite Gasstrahlen horizontal und quer zu der Förderrichtung 11 ausgeblasen.

Längs der Förderstrecke der Objekte 2 in der Förderrichtung 11 noch davor liegt ein dritter Teil 29 der Abblaseinrichtung 13 mit dem vor dem Ablasen von den beiden Seitenfläche 28 überschüssige aufgebrachte Überzugmasse 13 mit mindestens einem dritten Gasstrahl von Oberseiten 30 der Objekte 2 abgeblasen wird. Der mindestens eine dritte Gasstrahl wird an einer dritten Ausblaspositionen ausgeblasen, welche oberhalb der Oberseiten 30 der Objekte 2 angeordnet ist. Dabei kann der mindestens eine dritte Gasstrahl senkrecht nach unten ausgerichtet sein. Der mindestens eine dritte Gasstrahl kann dabei blattförmig ausgebildet sein und sich über die gesamte Breite des dritten Teils 29, welche alle Objektaufnahmebereiche und benachbarten Tiefbereiche überspannt, erstrecken.

Nach den ersten Teilen 22 der Abblaseinrichtung 13 gelangen die Objekte 2 in den Einwirkungsbereich einer Abnehmeinrichtung 31 mit einer Leckwelle 32, die überschüssige aufgebrachte Überzugmasse von einer Unterseite des Obertrums 10 und damit auch indirekt von den auf dem Obertrum 10 aufliegenden Objekten 2 abnimmt. Die Leckwelle 32 ist dabei so um eine quer zu der Förderrichtung 11 verlaufende Drehachse angetrieben, dass ihre in Kontakt mit dem Obertrum 10 stehende Oberseite eine der Förderrichtung 11 entgegengesetzte Bewegungsrichtung 33 aufweist.

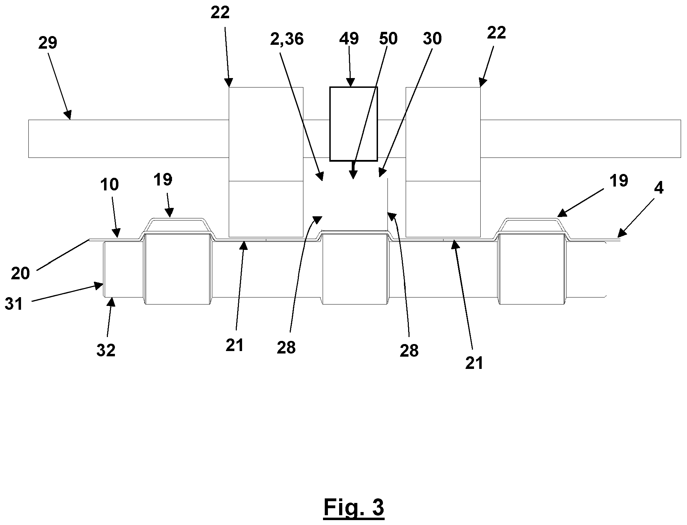

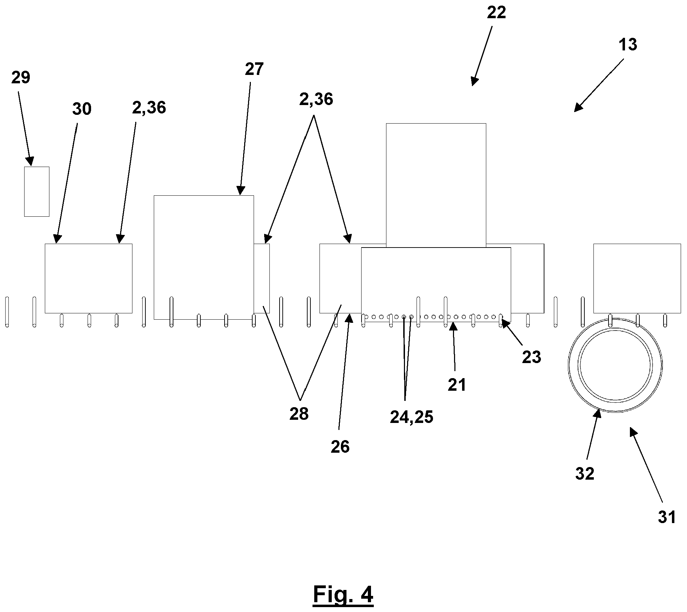

**Fig. 3** zeigt, dass die Leckwelle 32 der Abnehmeinrichtung 31 über die gesamte Breite des Gitterbands 4 an der Unterseite des Obertrums 10 angreift, außer im Bereich der Objektmitnehmer 19, die über den in der Förderrichtung 11 angrenzenden Objektauflagern erhöht sind. Außerdem zeigt Fig. 3, eine Niederhalteeinrichtung 49, die längs der hier senkrecht zur Zeichenebene verlaufenden Förderrichtung 11 auf Höhe der ersten Teilen 22 der Abblaseinrichtung 13 angeordnet ist. Die Niederhalteeinrichtung 49 beaufschlagt die Objekte 2 mit einem nach unten auf deren Oberseiten 30 gerichteten weiteren Gasstrahl 50, um die Objekte 2 während der Einwirkung der ersten Teile 22 der Abblaseinrichtung 13 auf dem Obertrum 10 niederzuhalten. Weitere Details der Anordnung der ersten Teile 22, zweiten Teile 27 und des dritten Teils 29 der Abblaseinrichtung 13 gegenüber dem Obertrum 10 des Förderbands 4 und den darauf aufliegenden Objekten 2 gehen aus Fig. 4 hervor.

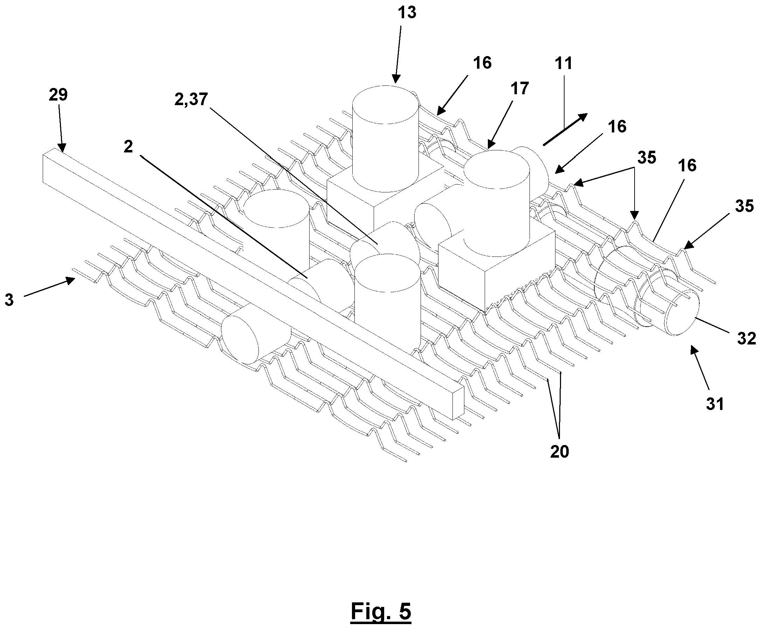

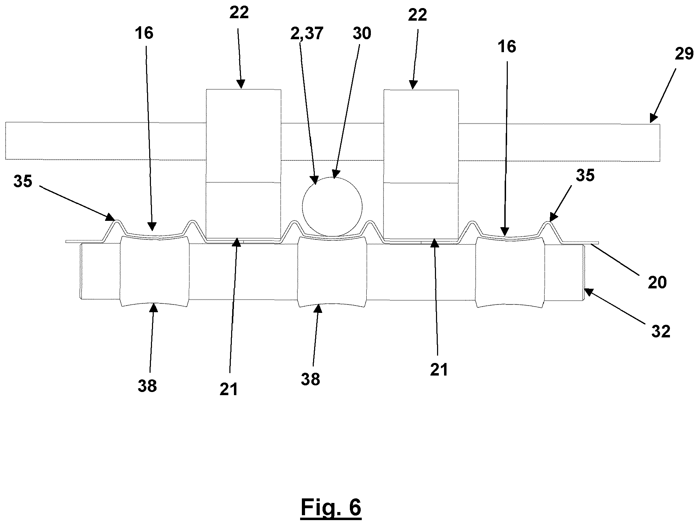

Bei der in den **Figuren 5** und **6** dargestellten Fördereinrichtung 3, Abblaseinrichtung 13 und Abnehmeinrichtung 31 sind in den Objektaufnahmebereichen 16 keine in der Förderrichtung 11 durch Objektmitnehmer begrenzte Objektauflager für die Objekte 2 ausgebildet. Stattdessen sind die Objektaufnahmebereiche 16 rinnenförmig ausgebildet und weisen quer zu der Förderrichtung 11 betrachtet erhöhte seitliche Ränder 35 auf, die von voneinander beabstandeten konvexen Ausformungen (hier dreieckigen Ausformungen mit Spitzen) der Gitterstäbe 20 gebildet sind. Die Höhe dieser Ränder 35 liegt abhängig von der Größe der Objekte 2 in einem typischen Bereich von wenigen Millimetern bis wenigen Zentimetern. Die Objekte 2 sind hier keine Quader 36 wie in den Figuren 2 bis 4, sondern Zylinder 37, deren Zylinderachsen in der Förderrichtung 11 ausgerichtet sind. Durch die erhöhten Ränder 35 werden die Zylinder 37 daran gehindert, seitlich von den Objektaufnahmebereichen 16 in einen der Tiefenbereiche 17 herunterzurollen. Fig. 6 zeigt zudem, dass die Objektaufnahmebereiche 16 zwischen den Rändern 35 leicht konkav ausgeformt sind und dass die Leckwelle 32 entsprechende konkave Bereiche 38 aufweist. Zusätzlich könnte die Leckwelle 32 bis in den Bereich der Ränder 35 eingeformt sein, um über deren gesamte Breite von unten an den Gitterstäben 20 anzugreifen.

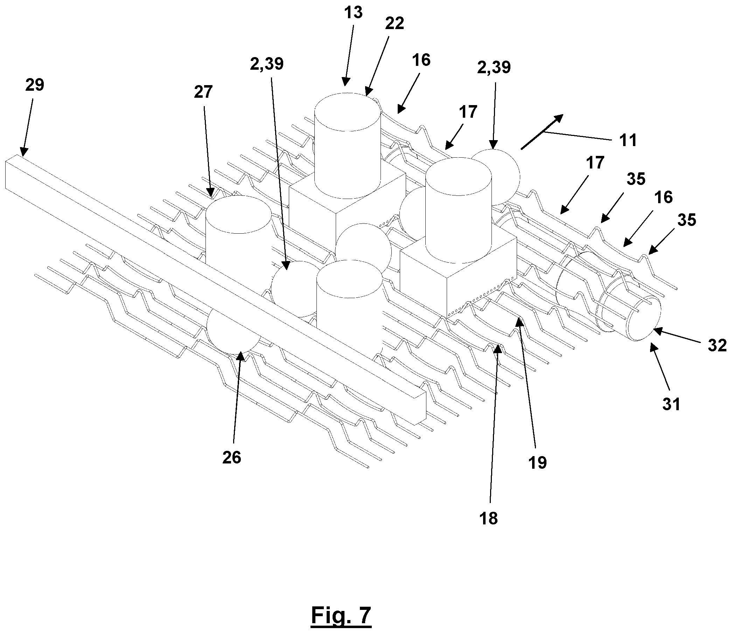

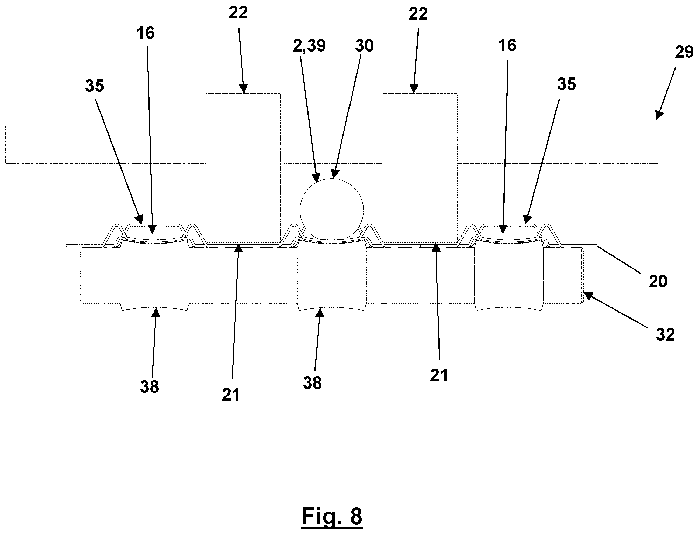

Die in den **Figuren 7** und **8** dargestellte Ausführungsform der Fördereinrichtung 3, der Abblaseinrichtung 13 und der Abnehmeinrichtung 31 ist für das Abblasen überschüssiger aufgebrachter Überzugmasse 34 von Objekten 2 in Form von Kugeln 39 ausgebildet. Dabei sind an die Form der Unterseiten 26 der Kugeln 39 angepasste Objektauflager 18 ausgebildet, die in der Förderrichtung 11 durch erhöhte Objektmitnehmer 19 und quer zu der Förderrichtung 11 durch erhöhte Ränder 35 begrenzt sind. So wird ein sicheres Fördern der Kugel 39 und zugleich ein Herunterrollen der Kugeln 39 von den Objektauflagern 18 verhindert, und dies auch und gerade dann, wenn die von den Teilen 22, 27 und 29 der Abblaseinrichtung 13 ausgeblasenen Gasstrahlen auf sie einwirken.

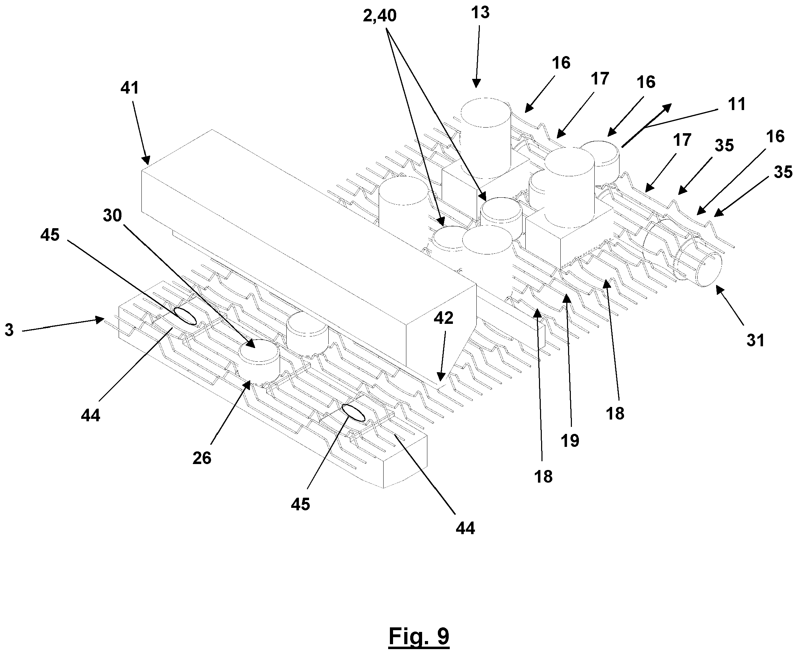

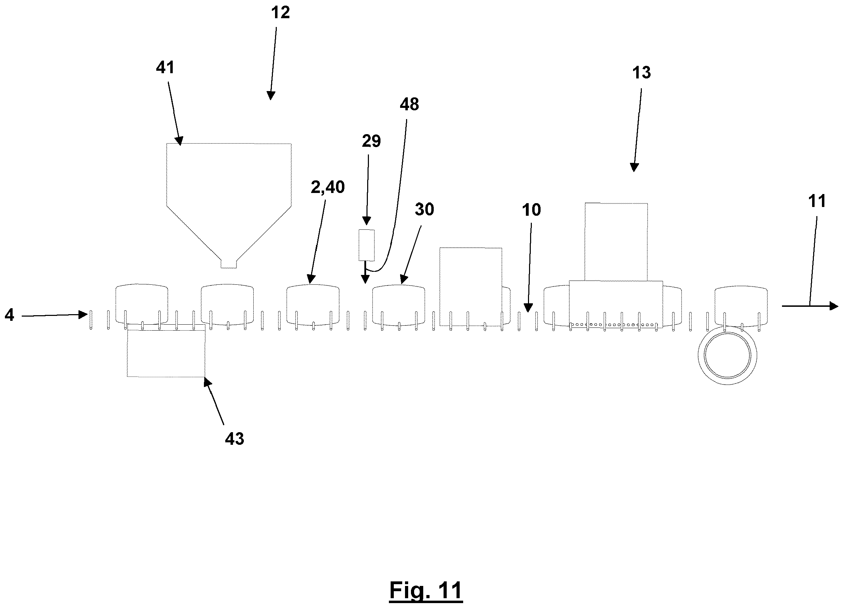

In den **Figuren 9** bis **11** ist eine weitere Ausführungsform der Fördereinrichtung 3, der Abblaseinrichtung 13 und der Abnehmeinrichtung 31 zusammen mit einer Ausführungsform der Masseaufbringeinrichtung 12 dargestellt. Die Fördereinrichtung 3 und die Abnehmeinrichtung 31 sind an Objekte 2 in Form von Pucks 40 angepasst, die von kurzen stehenden Zylindern durch ballige Oberseiten 30 und Unterseiten 26 abweichen. Die auf die Form der Objekte 2 abgestimmten und von Objektmitnehmern 19 und erhöhten Rändern 35 begrenzten Objektauflager 18 sind den Objektauflagern 18 für die Kugeln 39 gemäß den Figuren 7 und 8 ähnlich und können sogar übereinstimmen. Die in den Figuren 9 bis 11 zusätzlich gezeigte Masseaufbringeinrichtung 12 weist einen oberhalb des Obertrums 10 angeordneten Schleierkasten 41 auf, aus dem ein (nur in Fig. 11 angedeuteter) Schleier 42 aus der Überzugmasse 34 nach unten auf die Objekte 2 herab ausläuft. Unterhalb des Obertrums 10 des Gitterbands 4 weist die Masseaufbringeinrichtung 12 einen sogenannten Bodenwall 43 auf, der eine der Unterseite des Obertrums 10 des Gitterbands entsprechende Walloberseite 44 und im Bereich jedes Objektaufnahmebereichs 16 eine nach oben gerichtete Masseaustrittsöffnung 45 in der Walloberseite 44 aufweist. Mit der Masseaufbringeinrichtung 12 wird die Überzugmasse 34 von oben und unten auf die Objekte 2 und damit auf alle Oberflächen der Objekte 2 aufgebracht. Die in der Förderrichtung 11 nachfolgende Abblaseinrichtung 13 sorgt dafür, dass hieraus ein dünner, aber geschlossener Überzug der Überzugmasse 34 auf allen Oberflächen der Objekte 2 resultiert und überschüssige aufgebrachte Überzugmasse 34 durch Abblasen entfernt wird.

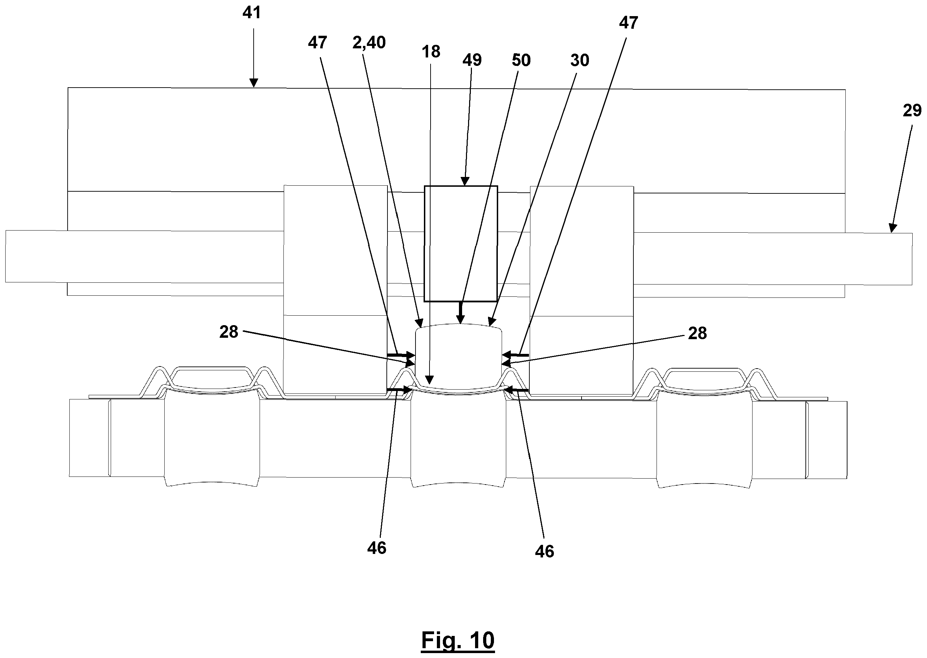

In die Figuren 10 und 11 sind exemplarisch von den ersten Teilen 22 der Abblaseinrichtung 13 unterhalb der Objektauflager 18 horizontal ausgeblasene erste Gasstrahlen 46, von den zweiten Teilen 27 der Abblaseinrichtung 13 auf die Seitenfläche 28 der Objekte 2 ausgeblasene zweite Gasstrahlen 47 und ein von dem dritten Teil 29 der Abblaseinrichtung 13 vertikal von oben auf die Oberseiten 30 der Objekte 2 ausgeblasener dritter Gasstrahl 48 eingezeichnet. Um die Gasstrahlen 46 und 47 besser erkennen zu können, ist Fig. 10 gegenüber den Figuren 9 und 11 vergrößert dargestellt.

### BEZUGSZEICHENLISTE

- 1: Überziehmaschine
- 2: Objekt
- 3: Fördereinrichtung
- 4: Gitterband
- 5: Umlenkrolle
- 6: Umlenkrolle
- 7: Umlenkrolle
- 8: Umlenkrolle
- 9: Motor
- 10: Obertrum
- 11: Förderrichtung
- 12: Masseaufbringeinrichtung
- 13: Abblaseinrichtung
- 14: Wanne
- 15: Luft
- 16: Objektaufnahmebereich
- 17: Tiefbereich
- 18: Objektauflager
- 19: Objektmitnehmer
- 20: Gitterstab
- 21: unteres Ende der Abblaseinrichtung 13
- 22: erster Teil der Abblaseinrichtung 13
- 23: Reihe
- 24: Ausblasöffnung
- 25: Ausblasposition
- 26: Unterseite
- 27: zweiter Teil der Abblaseinrichtung 13
- 28: Seitenfläche des Objekts 2
- 29: dritter Teil der Abblaseinrichtung 13
- 30: Oberseite des Objekts 2
- 31: Abnehmeinrichtung
- 32: Leckwelle
- 33: Bewegungsrichtung
- 34: Überzugmasse
- 35: Rand
- 36: Quader
- 37: Zylinder
- 38: konkaver Bereich
- 39: Kugel
- 40: Puck
- 41: Schleierkasten
- 42: Schleier
- 43: Bodenwall
- 44: Walloberseite
- 45: Masseaustrittsöffnung
- 46: erster Gasstrahl
- 47: zweiter Gasstrahl
- 48: dritter Gasstrahl
- 49: Niederhalteeinrichtung
- 50: weiterer Gasstrahl

## Patentansprüche

1. Verfahren zum Überziehen von Objekten (2) mit einer fließfähigen Überzugmasse (34) mit
- Aufbringen der Überzugmasse (34) auf die Objekte (2) und
- Abblasen von überschüssiger aufgebrachter Überzugmasse (34) von den auf einem Obertrum (10) eines Gitterbands (4) aufliegenden und durch Fortbewegen des Obertrums (10) in einer Förderrichtung (11) geförderten Objekten (2),
**dadurch gekennzeichnet,**
- **dass** die überschüssige aufgebrachte Überzugmasse (34) von Unterseiten (26) der auf dem Obertrum (10) aufliegenden und durch Fortbewegen des Obertrums (10) in der Förderrichtung (11) geförderten Objekte (2) mit mindestens einem ersten Gasstrahl (46) abgeblasen wird, der an einer ersten Ausblasposition (25) ausgeblasen wird, welche unterhalb der Unterseiten (26) der Objekte (2) und in Bezug auf die Förderrichtung (11) seitlich neben den Unterseiten (26) der Objekte (2) angeordnet ist.

2. Verfahren nach Anspruch 1, **wobei** die Objekte (2) in der Förderrichtung (11) betrachtet im Bereich jedes ersten Gasstrahls (46) mit mindestens einem weiteren Gasstrahl (50) beaufschlagt werden, der nach unten auf ihre Oberseiten (30) gerichtet ist, um die Objekte (2) auf dem Obertrum (10) niederzuhalten.

3. Verfahren nach Anspruch 1 oder 2, **wobei** die überschüssige aufgebrachte Überzugmasse (34) vor dem Abblasen von den Unterseiten (26) von beiden Seitenflächen (28) der auf dem Obertrum (10) aufliegenden und durch Fortbewegen des Obertrums (10) in der Förderrichtung (11) geförderten Objekte (2) mit mindestens zwei zweiten Gasstrahlen (47) abgeblasen wird, die an zweiten Ausblaspositionen ausgeblasen werden, welche in Bezug auf die Förderrichtung (11) den beiden Seitenflächen (28) der Objekte (2) seitlich gegenüberliegen.

4. Verfahren nach Anspruch 3, **wobei** die überschüssige aufgebrachte Überzugmasse (34) vor dem Abblasen von den beiden Seitenflächen (28) von den Oberseiten (30) der auf dem Obertrum (10) aufliegenden und durch Fortbewegen des Obertrums (10) in der Förderrichtung (11) geförderten Objekte (2) mit mindestens einem dritten Gasstrahl (48) abgeblasen wird, der an einer dritten Ausblasposition ausgeblasen wird, welche oberhalb der Oberseiten (30) der Objekte (2) angeordnet ist.

5. Verfahren nach einem der Ansprüche 1 bis 4, wobei die überschüssige aufgebrachte Überzugmasse (34) von den Unterseiten (26) der auf dem Obertrum (10) aufliegenden und durch Fortbewegen des Obertrums (10) in der Förderrichtung (11) geförderten Objekte (2) mit mindestens zwei ersten Gasstrahlen (46) abgeblasen wird, die an zweiten Ausblaspositionen (25) ausgeblasen werden, welche unterhalb der Unterseiten (26) der Objekte (2) und in Bezug auf die Förderrichtung (11) auf beiden Seiten neben den Unterseiten (26) der Objekte (2) angeordnet sind.

6. Verfahren nach einem der Ansprüche 1 bis 4, **wobei** die überschüssige aufgebrachte Überzugmasse (34) von den Unterseiten (26) der Objekte (2) mit mindestens einer Gruppe von ersten Gasstrahlen (46) abgeblasen wird, die an ersten Ausblaspositionen (25) ausgeblasen werden, welche unterhalb der Unterseiten (26) der Objekte (2) und in Bezug auf die Förderrichtung (11) seitlich neben den Unterseiten (26) der Objekte (2) hintereinander angeordnet sind, wobei die überschüssige aufgebrachte Überzugmasse (34) von den Unterseiten (26) der Objekte (2) optional mit zwei Gruppen von ersten Gasstrahlen (46) abgeblasen wird, die an ersten Ausblaspositionen (25) ausgeblasen werden, welche unterhalb der Unterseiten (26) der Objekte (2) und in Bezug auf die Förderrichtung (11) auf beiden Seiten neben den Unterseiten (26) der Objekte (2) hintereinander angeordnet sind.

7. Überziehmaschine (1) zum Überziehen von Objekten (2) mit einer fließfähigen Überzugmasse (34) mit
- einer Masseaufbringeinrichtung (12), die dazu ausgebildet ist, die Überzugmasse (34) auf die Objekte (2) aufzubringen,
- einer ein umlaufendes Gitterband (4) aufweisenden Fördereinrichtung (3), die dazu ausgebildet ist, die auf einem Obertrum (10) des Gitterbands (4) aufliegenden Objekte (2) durch Fortbewegen des Obertrums (10) in einer Förderrichtung (11) zu fördern, und
- einer oberhalb des Obertrums (10) angeordneten Abblaseinrichtung (13), die dazu ausgebildet ist, überschüssige aufgebrachte Überzugmasse (34) von den auf dem Obertrum (10) aufliegenden und durch Fortbewegen des Obertrums (10) in der Förderrichtung (11) geförderten Objekten (2) abzublasen,
**dadurch gekennzeichnet,**
- **dass** das Obertrum (10) in Querrichtung zu der Förderrichtung (11) betrachtet mindestens einen Objektaufnahmebereich (16) und auf mindestens einer Seite jedes Objektaufnahmebereichs (16) einen in der Förderrichtung (11) durchlaufenden und gegenüber dem jeweiligen Objektaufnahmebereich (16) abgesenkten Tiefbereich (17) aufweist und
- **dass** ein unteres Ende (21) der Abblaseinrichtung (13) über dem Tiefbereich (17) bis auf ein Höhenniveau unterhalb von tiefsten Abstützpunkten einer Oberseite des mindestens einen Objektaufnahmebereichs (16) absenkbar oder abgesenkt ist.

8. Überziehmaschine (1) nach Anspruch 6, wobei das untere Ende (21) der Abblaseinrichtung (13) mindestens eine Ausblasöffnung (24) aufweist, die über dem Tiefbereich (17) zumindest teilweise bis auf ein Höhenniveau unterhalb der tiefsten Abstützpunkte des mindestens einen Objektaufnahmebereichs (16) absenkbar oder abgesenkt ist, wobei die Ausblasöffnung (24) optional horizontal zu dem mindestens einen Objektaufnahmebereich (16) hin ausgerichtet ist.

9. Überziehmaschine (1) nach Anspruch 7 oder 8, **wobei** in der Förderrichtung (11) betrachtet im Bereich des untere Ende (21) der Abblaseinrichtung (13) eine Niederhalteeinrichtung (49) oberhalb des Obertrums (10) angeordnet ist, die dazu ausgebildet ist, die Objekte (2) mit mindestens einem weiteren Gasstrahl (50) zu beaufschlagen, der nach unten auf ihre Oberseiten (30) gerichtet ist, um die Objekte (2) auf dem Obertrum (10) niederzuhalten.

10. Überziehmaschine (1) nach einem der Ansprüche 7 bis 9, **wobei** der Tiefbereich (17) gegenüber den tiefsten Abstützpunkten des mindestens einen Objektaufnahmebereichs (16) um mindestens 3 mm, vorzugsweise um mindestens 6 mm und am meisten bevorzugt um mindestens 10 mm abgesenkt ist.

11. Überziehmaschine (1) nach einem der Ansprüche 7 bis 10, **wobei** in dem mindestens einen Objektaufnahmebereich (16) in der Förderrichtung (11) wechselweise aufeinanderfolgende Objektauflager (18) und Objektmitnehmer (19) ausgebildet sind, die gegenüber den Objektauflagern (18) erhöht sind, **wobei** die Objektmitnehmer (19) gegenüber den Objektauflagern (18) optional um mindestens 2 mm, vorzugsweise um mindestens 4 mm und am meisten bevorzugt um mindestens 6 mm erhöht sind.

12. Überziehmaschine (1) nach einem der Ansprüche 6 bis 11, **wobei** der mindestens eine Objektaufnahmebereich (16) in Querrichtung zu der Förderrichtung (11) betrachtet zumindest im Bereich von Objektauflagern (18) eine Rinnenform aufweist, **wobei** optional seitliche Ränder (35) gegenüber den tiefsten Abstützpunkten des mindestens einen Objektaufnahmebereichs (16) um mindestens 2 mm, vorzugsweise um mindestens 4 mm und am meisten bevorzugt um mindestens 6 mm erhöht sind.

13. Überziehmaschine (1) nach einem der Ansprüche 6 bis 12 mit einer unterhalb des Obertrums (10) angeordneten Abnehmeinrichtung (31), die dazu ausgebildet ist, überschüssige aufgebrachte Überzugmasse (34) von einer Unterseite des Obertrums (10) und/oder von Unterseiten (26) der auf dem Obertrum (10) aufliegenden Objekte (2) abzunehmen, **wobei** die Abnehmeinrichtung (31) optional in dem Objektaufnahmebereich (16) und in jedem benachbarten Tiefbereich (17) an dem Obertrum (10) angreift.

14. Überziehmaschine (1) nach Anspruch 13, **wobei** die Abnehmeinrichtung (31) eine Leckwelle (32) aufweist, die um eine quer zu der Förderrichtung (11) verlaufende Drehachse drehangetrieben ist.

15. Überziehmaschine (1) nach einem der vorhergehenden Ansprüche, **wobei** die Aufbringeinrichtung (12) einen oberhalb des Obertrums (10) angeordneten Schleierkasten (41) und einen unterhalb des Obertrums (10) angeordneten Bodenwall (43) aufweist, wobei der Bodenwall (43) eine der Unterseite des Obertrums (10) zumindest in dem mindestens einen Objektaufnahmebereich (16) entsprechende Walloberseite (44) und eine nach oben gerichtete Masseaustrittsöffnung (45) in der Walloberseite (44) aufweist.

## Geänderte Patentansprüche

### Geänderte Patentansprüche gemäss Regel 137(2) EPÜ.

1. Verfahren zum Überziehen von Objekten (2) mit einer fließfähigen Überzugmasse (34) mit
- Aufbringen der Überzugmasse (34) auf die Objekte (2) und
- Abblasen von überschüssiger aufgebrachter Überzugmasse (34) von den auf einem Obertrum (10) eines Gitterbands (4) aufliegenden und durch Fortbewegen des Obertrums (10) in einer Förderrichtung (11) geförderten Objekten (2),
**dadurch gekennzeichnet,**
- **dass** die überschüssige aufgebrachte Überzugmasse (34) von Unterseiten (26) der auf dem Obertrum (10) aufliegenden und durch Fortbewegen des Obertrums (10) in der Förderrichtung (11) geförderten Objekte (2) mit mindestens einem ersten Gasstrahl (46) abgeblasen wird, der an einer ersten Ausblasposition (25) ausgeblasen wird, welche unterhalb der Unterseiten (26) der Objekte (2) und in Bezug auf die Förderrichtung (11) seitlich neben den Unterseiten (26) der Objekte (2) angeordnet ist.

2. Verfahren nach Anspruch 1, **wobei** die Objekte (2) in der Förderrichtung (11) betrachtet im Bereich jedes ersten Gasstrahls (46) mit mindestens einem weiteren Gasstrahl (50) beaufschlagt werden, der nach unten auf ihre Oberseiten (30) gerichtet ist, um die Objekte (2) auf dem Obertrum (10) niederzuhalten.

3. Verfahren nach Anspruch 1 oder 2, **wobei** die überschüssige aufgebrachte Überzugmasse (34) vor dem Abblasen von den Unterseiten (26) von beiden Seitenflächen (28) der auf dem Obertrum (10) aufliegenden und durch Fortbewegen des Obertrums (10) in der Förderrichtung (11) geförderten Objekte (2) mit mindestens zwei zweiten Gasstrahlen (47) abgeblasen wird, die an zweiten Ausblaspositionen ausgeblasen werden, welche in Bezug auf die Förderrichtung (11) den beiden Seitenflächen (28) der Objekte (2) seitlich gegenüberliegen.

4. Verfahren nach Anspruch 3, **wobei** die überschüssige aufgebrachte Überzugmasse (34) vor dem Abblasen von den beiden Seitenflächen (28) von den Oberseiten (30) der auf dem Obertrum (10) aufliegenden und durch Fortbewegen des Obertrums (10) in der Förderrichtung (11) geförderten Objekte (2) mit mindestens einem dritten Gasstrahl (48) abgeblasen wird, der an einer dritten Ausblasposition ausgeblasen wird, welche oberhalb der Oberseiten (30) der Objekte (2) angeordnet ist.

5. Verfahren nach einem der Ansprüche 1 bis 4, **wobei** die überschüssige aufgebrachte Überzugmasse (34) von den Unterseiten (26) der auf dem Obertrum (10) aufliegenden und durch Fortbewegen des Obertrums (10) in der Förderrichtung (11) geförderten Objekte (2) mit mindestens zwei ersten Gasstrahlen (46) abgeblasen wird, die an ersten Ausblaspositionen (25) ausgeblasen werden, welche unterhalb der Unterseiten (26) der Objekte (2) und in Bezug auf die Förderrichtung (11) auf beiden Seiten neben den Unterseiten (26) der Objekte (2) angeordnet sind.

6. Verfahren nach einem der Ansprüche 1 bis 4, **wobei** die überschüssige aufgebrachte Überzugmasse (34) von den Unterseiten (26) der Objekte (2) mit mindestens einer Gruppe von ersten Gasstrahlen (46) abgeblasen wird, die an ersten Ausblaspositionen (25) ausgeblasen werden, welche unterhalb der Unterseiten (26) der Objekte (2) und in Bezug auf die Förderrichtung (11) seitlich neben den Unterseiten (26) der Objekte (2) hintereinander angeordnet sind, wobei die überschüssige aufgebrachte Überzugmasse (34) von den Unterseiten (26) der Objekte (2) optional mit zwei Gruppen von ersten Gasstrahlen (46) abgeblasen wird, die an ersten Ausblaspositionen (25) ausgeblasen werden, welche unterhalb der Unterseiten (26) der Objekte (2) und in Bezug auf die Förderrichtung (11) auf beiden Seiten neben den Unterseiten (26) der Objekte (2) hintereinander angeordnet sind.

7. Überziehmaschine (1) zum Überziehen von Objekten (2) mit einer fließfähigen Überzugmasse (34) mit
- einer Masseaufbringeinrichtung (12), die dazu ausgebildet ist, die Überzugmasse (34) auf die Objekte (2) aufzubringen,
- einer ein umlaufendes Gitterband (4) aufweisenden Fördereinrichtung (3), die dazu ausgebildet ist, die auf einem Obertrum (10) des Gitterbands (4) aufliegenden Objekte (2) durch Fortbewegen des Obertrums (10) in einer Förderrichtung (11) zu fördern, und
- einer oberhalb des Obertrums (10) angeordneten Abblaseinrichtung (13), die dazu ausgebildet ist, überschüssige aufgebrachte Überzugmasse (34) von den auf dem Obertrum (10) aufliegenden und durch Fortbewegen des Obertrums (10) in der Förderrichtung (11) geförderten Objekten (2) abzublasen,
**dadurch gekennzeichnet,**
- **dass** das Obertrum (10) in Querrichtung zu der Förderrichtung (11) betrachtet mindestens einen Objektaufnahmebereich (16) und auf mindestens einer Seite jedes Objektaufnahmebereichs (16) einen in der Förderrichtung (11) durchlaufenden und gegenüber dem jeweiligen Objektaufnahmebereich (16) abgesenkten Tiefbereich (17) aufweist und
- **dass** ein unteres Ende (21) der Abblaseinrichtung (13) über dem Tiefbereich (17) bis auf ein Höhenniveau unterhalb von tiefsten Abstützpunkten einer Oberseite des mindestens einen Objektaufnahmebereichs (16) absenkbar oder abgesenkt ist.

8. Überziehmaschine (1) nach Anspruch 7, **wobei** das untere Ende (21) der Abblaseinrichtung (13) mindestens eine Ausblasöffnung (24) aufweist, die über dem Tiefbereich (17) zumindest teilweise bis auf ein Höhenniveau unterhalb der tiefsten Abstützpunkte des mindestens einen Objektaufnahmebereichs (16) absenkbar oder abgesenkt ist, **wobei** die Ausblasöffnung (24) optional horizontal zu dem mindestens einen Objektaufnahmebereich (16) hin ausgerichtet ist.

9. Überziehmaschine (1) nach Anspruch 7 oder 8, **wobei** in der Förderrichtung (11) betrachtet im Bereich des untere Ende (21) der Abblaseinrichtung (13) eine Niederhalteeinrichtung (49) oberhalb des Obertrums (10) angeordnet ist, die dazu ausgebildet ist, die Objekte (2) mit mindestens einem weiteren Gasstrahl (50) zu beaufschlagen, der nach unten auf ihre Oberseiten (30) gerichtet ist, um die Objekte (2) auf dem Obertrum (10) niederzuhalten.

10. Überziehmaschine (1) nach einem der Ansprüche 7 bis 9, **wobei** der Tiefbereich (17) gegenüber den tiefsten Abstützpunkten des mindestens einen Objektaufnahmebereichs (16) um mindestens 3 mm, vorzugsweise um mindestens 6 mm und am meisten bevorzugt um mindestens 10 mm abgesenkt ist.

11. Überziehmaschine (1) nach einem der Ansprüche 7 bis 10, **wobei** in dem mindestens einen Objektaufnahmebereich (16) in der Förderrichtung (11) wechselweise aufeinanderfolgende Objektauflager (18) und Objektmitnehmer (19) ausgebildet sind, die gegenüber den Objektauflagern (18) erhöht sind, **wobei** die Objektmitnehmer (19) gegenüber den Objektauflagern (18) optional um mindestens 2 mm, vorzugsweise um mindestens 4 mm und am meisten bevorzugt um mindestens 6 mm erhöht sind.

12. Überziehmaschine (1) nach einem der Ansprüche 7 bis 11, **wobei** der mindestens eine Objektaufnahmebereich (16) in Querrichtung zu der Förderrichtung (11) betrachtet zumindest im Bereich von Objektauflagern (18) eine Rinnenform aufweist, **wobei** optional seitliche Ränder (35) gegenüber den tiefsten Abstützpunkten des mindestens einen Objektaufnahmebereichs (16) um mindestens 2 mm, vorzugsweise um mindestens 4 mm und am meisten bevorzugt um mindestens 6 mm erhöht sind.

13. Überziehmaschine (1) nach einem der Ansprüche 7 bis 12 mit einer unterhalb des Obertrums (10) angeordneten Abnehmeinrichtung (31), die dazu ausgebildet ist, überschüssige aufgebrachte Überzugmasse (34) von einer Unterseite des Obertrums (10) und/oder von Unterseiten (26) der auf dem Obertrum (10) aufliegenden Objekte (2) abzunehmen, **wobei** die Abnehmeinrichtung (31) optional in dem Objektaufnahmebereich (16) und in jedem benachbarten Tiefbereich (17) an dem Obertrum (10) angreift.

14. Überziehmaschine (1) nach Anspruch 13, **wobei** die Abnehmeinrichtung (31) eine Leckwelle (32) aufweist, die um eine quer zu der Förderrichtung (11) verlaufende Drehachse drehangetrieben ist.

15. Überziehmaschine (1) nach einem der Ansprüche 7 bis 14, **wobei** die Aufbringeinrichtung (12) einen oberhalb des Obertrums (10) angeordneten Schleierkasten (41) und einen unterhalb des Obertrums (10) angeordneten Bodenwall (43) aufweist, wobei der Bodenwall (43) eine der Unterseite des Obertrums (10) zumindest in dem mindestens einen Objektaufnahmebereich (16) entsprechende Walloberseite (44) und eine nach oben gerichtete Masseaustrittsöffnung (45) in der Walloberseite (44) aufweist.
